(19) Europäisches Patentamt
European Patent Office
Office européen des brevets

(11) EP 3 736 305 B1

(12) EUROPEAN PATENT SPECIFICATION

(45) Date of publication and mention of the grant of the patent:
**05.01.2022 Bulletin 2022/01**

(21) Application number: **20180188.3**

(22) Date of filing: **12.04.2017**

(51) Int Cl.:
***C08G 73/14*** *(2006.01)* ***C08G 73/10*** *(2006.01)*
***C08L 79/08*** *(2006.01)* ***C08J 5/18*** *(2006.01)*
***C08G 18/34*** *(2006.01)* ***C08G 18/77*** *(2006.01)*

(54) **POLYAMIDE-IMIDE, METHOD FOR PREPARING SAME, AND POLYAMIDE-IMIDE FILM USING SAME**

POLYAMIDIMID, VERFAHREN ZUR HERSTELLUNG DAVON UND POLYAMIDIMIDFILM DAMIT

POLYAMIDE-IMIDE, SON PROCÉDÉ DE PRÉPARATION ET FILM DE POLYAMIDE-IMIDE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2016 KR 20160063317**

(43) Date of publication of application:
**11.11.2020 Bulletin 2020/46**

(62) Document number(s) of the earlier application(s) in accordance with Art. 76 EPC:
**17802981.5 / 3 363 845**

(73) Proprietor: **LG CHEM, LTD.**
**Yeongdeungpo-gu,**
**Seoul 07336 (KR)**

(72) Inventors:
- **YUN, Cheolmin**
**34122 Daejeon (KR)**
- **SUH, Jun Sik**
**34122 Daejeon (KR)**
- **KIM, Kyungjun**
**34122 Daejeon (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-2013/048126 KR-A- 20080 013 076**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 736 305 B1

## Description

[Technical Field]

The present invention relates to a method for manufacturing a colorless and transparent polyamide-imide having a mechanical property of high strength.

[Background Art]

Polyimide (PI) is a polymer having relatively low crystallinity or amorphous structure, and it has advantages such as easy manufacturing process, easy process to make a thin film and no crosslinkable moieties necessary for curing, as well as polymeric properties such as high transparency, excellent flame and chemical resistance, excellent mechanical and electrical properties, and dimensional stability due to its rigid chain structure. The polyimide is now widely used as an electrical and electronical material for the field of car and aerospace, a flexible circuit board, a liquid crystal alignment film for LCD, an adhesive as well as a coating agent.

However, even though the polyimide is a high performance polymer with excellent thermal stability, mechanical properties, chemical resistance and electrical properties, it does not satisfy the basic requirements for the display area such as colorless transparency, and the thermal expansion coefficient should be further lowered. For example, KAPTON sold by Dupont has low thermal coefficient of about 30 ppm/°C, but it also does not meet the requirement for the plastic substrate. Therefore, now studies for minimizing change in thermal history and optical properties while maintaining the basic properties of the polyimide are underway.

In general, aromatic polyimide has unique color of dark brown. The reason for this is that electrons can be excited due to a σ electron, a π electron, a nonbonding unshared electron pair within the imide structure, and it can be explained by the theory of charge transfer complex (hereinafter, called CT-complex) induced by π electrons of benzene within a main chain of the polyimide.

In general, the polyimide absorbs light of the wavelength below 400 nm to 500 nm of visible light region, and therefore it shows complementary color of yellow to red. In order to lower the CT-complex that is an disadvantage of the polyimide, a method of introducing an electron-withdrawing functional group having relatively strong electronegativity such as trifluoromethyl (($-CF_3$), sulfone ($-SO_2$) and ether (-O-) to the main chain of the polyimide is used to lower resonance effect by limiting the movement of π electron. Also introducing a cyclo-olefin structure instead of benzene to the main chain of the polyimide can reduce π electron density to manufacture a colorless transparent polyimide film.

Meanwhile, polyamide-imide has been widely used as an industrial material in the electrical, mechanical, electronic and aerospace fields due to its excellent properties such as thermal resistance, mechanical strength and electrical property. Also, in general, structure of the polyamide-imide is different from that of the polyimide and is known to be soluble in an organic solvent, allowing for the application for an enamel varnish, a coating agent for electrical insulation and paint, which need solution casting.

WO 2013/048126 A1 discloses a polyamide-imide copolymer film and a method for preparing a polyamide-imide copolymer.

KR 2008-0013076 A discloses a insulating varnish composition containing polyamide-imide and an insulated wire containing an insulated layer coated thereof.

However, for the application in the display area, it is still necessary to develop a polymer for the flexible display with lower thermal expansion coefficient, high solubility, transparency as well as thermal stability.

[Disclosure]

[Technical Problem]

One object of the present invention is to provide a method for manufacturing a polyamide-imide with enhanced transparency and mechanical strength.

[Technical Solution]

The above problems are solved in accordance with the subject matter of the independent claims. Preferred embodiments result from the subclaims.

In order to accomplish the aforementioned object, the present invention provides a method for manufacturing polyamide-imide containing a repeating structure of the following Chemical Formula 1a and a repeating structure of the following Chemical Formula 1b together:

[Chemical Formula 1a]

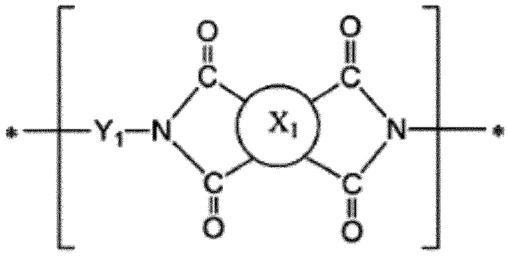

[Chemical Formula 1b]

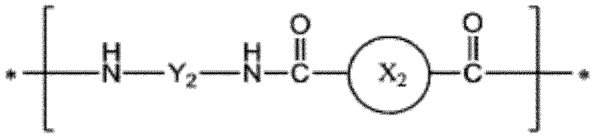

wherein,

$X_1$ may be a tetravalent organic group of the following Chemical Formula 2 derived from tetracarboxylic dianhydride,

[Chemical Formula 2]

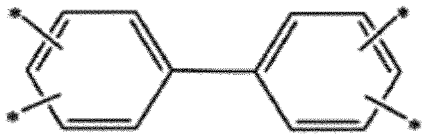

$X_2$ may be a divalent organic group derived from the compound of the following Chemical Formula 3,

[Chemical Formula 3]

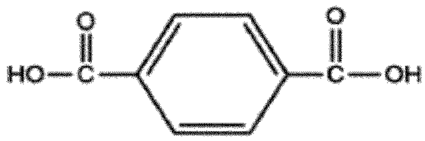

wherein,

$Y_1$ and $Y_2$ may be, each independently, a divalent organic group derived from diisocyanate, and any one of $Y_1$ and $Y_2$ may contain a divalent organic group derived from the compound of the following Chemical Formula 4:

[Chemical Formula 4]

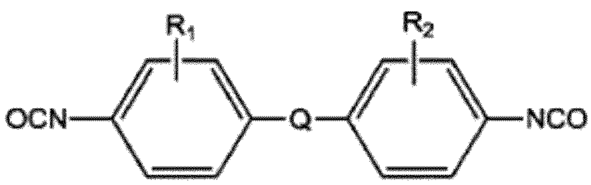

wherein,

$R_1$ and $R_2$ may be each independently a substituent selected from a halogen atom comprising -F, -Cl, -Br and -I, a

hydroxyl group (-OH), a thiol group (-SH), a nitro group (-$NO_2$), a cyano group, a $C_{1-10}$ alkyl group, a $C_{1-4}$ halogenoalkoxyl group, a $C_{1-10}$ halogenoalkyl group, and a $C_{6-20}$ aryl group,
Q may be selected from the group consisting of a single bond, -O-, - $CR_{18}R_{19}$-, -C(=O)-, -C(=O)O-, -C(=O)NH-, -S-, -$SO_2$-, a phenylene group and a combination thereof, wherein $R_{18}$ and $R_{19}$ may be each independently selected from the group consisting of a hydrogen atom, a $C_{1-10}$ alkyl group and a $C_{1-10}$ fluoroalkyl group; the method comprising the following steps of:

a) stirring a solution of diisocyanate containing the compound of the following Chemical Formula 4;
b) adding tetracarboxylic dianhydride containing the structure of the following Chemical Formula 2 and the compound of the following Chemical Formula 3 to the solution prepared in the step a) followed by reacting thereof to prepare a polyamide-imide precursor; and
c) imidizing the polyamide-imide precursor:

[Chemical Formula 2]

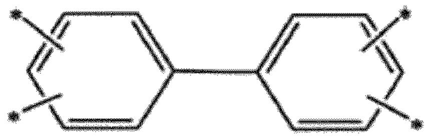

[Chemical Formula 3]

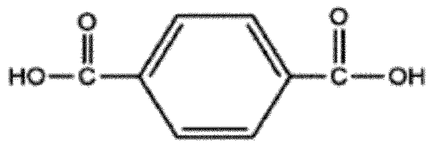

[Chemical Formula 4]

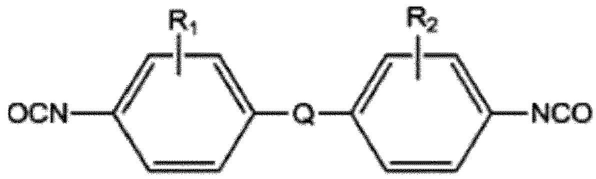

wherein,
$R_1$ and $R_2$ are each independently a substituent selected from a halogen atom comprising -F, -Cl, -Br and -I, a hydroxyl group (-OH), a thiol group (-SH), a nitro group (-$NO_2$), a cyano group, a $C_{1-10}$ alkyl group, a $C_{1-4}$ halogenoalkoxyl group, a $C_{1-10}$ halogenoalkyl group, and a $C_{6-20}$ aryl group.

Further wherein the divalent organic group of the Chemical Formula 4 is selected from the compounds of the following Chemical Formula 4a to Chemical Formula 4d:

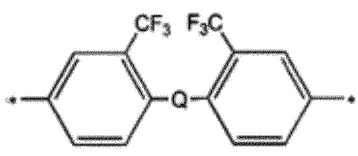

(4a)

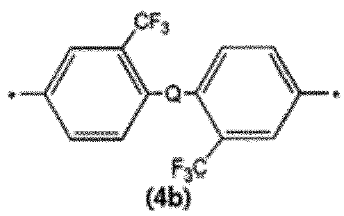

(4b)

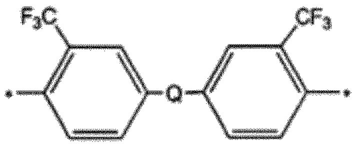

(4c)

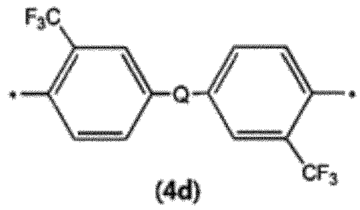

(4d)

wherein, Q has the same meanings as defined in the Chemical Formula 4..

[Advantageous Effects]

The present invention provides a method for manufacturing a polyamide-imide film with highly enhanced mechanical properties and heat resistance while maintaining transparency. The polyamide-imide with excellent transparency, heat resistance, mechanical strength and flexibility can be used in various fields such as a substrate for a device, a cover substrate for a display, an optical film, an integrated circuit (IC) package, an adhesive film, a multi-layer flexible printed circuit (FPC), a tape, a touch panel and a protection film for an optical disk.

[Mode for Invention]

Unless particularly stated otherwise herein, all the compounds or organic groups may be substituted or unsubstituted. Herein, the term 'substituted' means that at least one hydrogen atom in such a compound or substituent has been replaced by any one substituent selected from the group consisting of a halogen atom, a $C_{1-10}$ alkyl group, a halogenated alkyl group, a $C_{3-30}$ cycloalkyl group, a $C_{6-30}$ aryl group, a hydroxyl group, a $C_{1-10}$ alkoxyl group, a carboxyl group, an aldehyde group, an epoxy group, a cyano group, a nitro group, an amino group, a sulfonic acid group and derivatives thereof.

Further, unless particularly stated otherwise herein, the term 'combination thereof means that two or more functional groups are bonded by a single bond, a double bond, a triple bond or a linking group such as a $C_{1-10}$ alkylene group (e.g., methylene group ($-CH_2$), ethylene group ($-CH_2CH_2-$), etc.), a $C_{1-10}$ fluoroalkylene group (e.g., fluoromethylene group ($-CF_2-$), a perfluoroethylene group ($-CF_2CF_2-$), etc.), a hetero atom such as N, O, P, S or Si, or a functional group containing thereof (e.g., intramolecular carbonyl group (-C=O-), ether group (-O-), ester group (-COO-), heteroalkylene group containing -S-, -NH-, -N=N-, etc.), or two or more functional groups are connected by condensation.

Polyimide is a polymer composed of rigid aromatic groups and imide bonds, thereby having excellent mechanical properties and heat resistance, and it is variously used in many industrial fields based on such characteristics. However, the existing polyimide may be yellowed because it absorbs light in part of visible light region by electron transfer in chains and between chains, and the yellowness may hinder possibility as a highly heat resistant and transparent material for a display. This yellowness may be caused by charge transfer complex, and it may be more severely occurred as more packing is happened between the polyimide polymer chains. In order to solve the yellowness problem, the present invention may provide a method for minimizing charge transfer by introducing a repeating unit containing other group to a polyimide main chain to hinder the packing between the polyimide chains. As the repeating unit, polyamide may be introduced to a polyimide chain. The polymer also has excellent mechanical properties and heat resistance like the polyimide and therefore, it can prevent the packing between the polymer chains during copolymerization with the polyimide and further reduce the charge transfer so as to improve optical properties. However, in terms of the polyamide structure having partial crystalline structure caused by rigid chain structure and hydrogen bonds between chain structures, transparency may be deteriorated, and also cloudiness may occur due to incompatibility between the crystalline structure of the polyamide and non-crystalline structure of the polyimide.

In order to solve these existing problems,
the present invention provides method for manufacturing a polyamide-imide containing a repeating structure of the following Chemical Formula 1a and a repeating structure of the following Chemical Formula 1b together:

[Chemical Formula 1a]

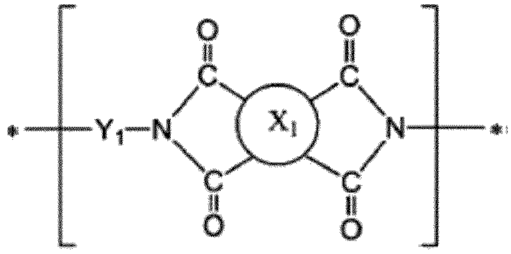

[Chemical Formula 1b]

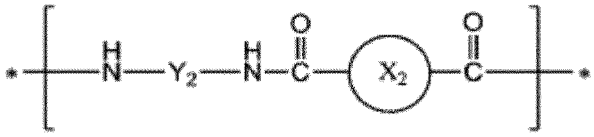

wherein,
$X_1$ may be a tetravalent organic group of the following Chemical Formula 2 derived from tetracarboxylic dianhydride,

[Chemical Formula 2]

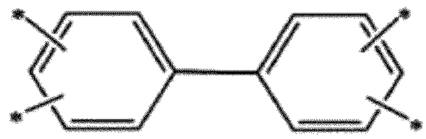

$X_2$ may be a divalent organic group derived from the compound of the following Chemical Formula 3,

[Chemical Formula 3]

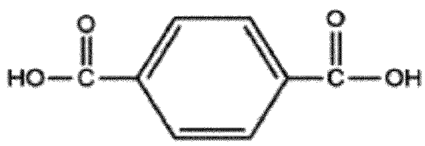

wherein,
$Y_1$ and $Y_2$ may be, each independently, a divalent organic group derived from diisocyanate, and any one of $Y_1$ and $Y_2$ may contain a divalent organic group derived from the compound of the following Chemical Formula 4:

[Chemical Formula 4]

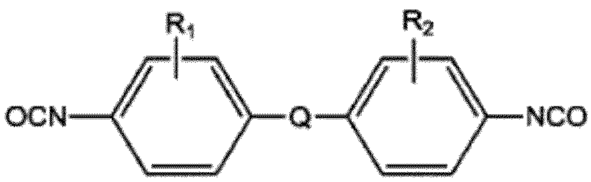

wherein,
$R_1$ and $R_2$ may be each independently a substituent selected from a halogen atom comprising -F, -Cl, -Br and -I, a hydroxyl group (-OH), a thiol group (-SH), a nitro group (-$NO_2$), a cyano group, a $C_{1-10}$ alkyl group, a $C_{1-4}$ halogenoalkoxyl group, a $C_{1-10}$ halogenoalkyl group, and a $C_{6-20}$ aryl group, and preferably, it may be a substituent selected from a

halogen atom, a halogenoalkyl, an alkyl group, an aryl group and a cyano group. Q may be selected from the group consisting of a single bond, -O-, $-CR_{18}R_{19}-$, -C(=O)-, -C(=O)O-, -C(=O)NH-, - S-, $-SO_2-$, a phenylene group and a combination thereof, wherein $R_{18}$ and $R_{19}$ may be each independently selected from the group consisting of a hydrogen atom, a $C_{1-10}$ alkyl group and a $C_{1-10}$ fluoroalkyl group.

For example, the halogen atom may be fluorine (-F), the halogenoalkyl may be a $C_{1-10}$ fluoroalkyl containing a fluorine atom selected from a fluoromethyl group, a perfluoroethyl group, a trifluoromethyl group and the like, the alkyl group may be selected from a methyl group, an ethyl group, a propyl group, an isopropyl group, a t-butyl group, a pentyl group and a hexyl group, and the aryl group may be selected from a phenyl group and a naphthalenyl group. More preferably, the substituent may be a fluorine atom and a fluoroalkyl group containing a fluorine atom.

According to one embodiment, the compound of the Chemical Formula 2 may be selected from tetracarboxylic dianhydrides having structures of the following Chemical Formula 2a to Chemical Formula 2e.

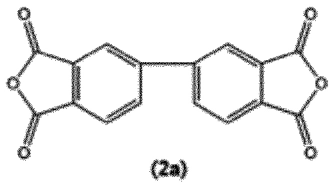

(2a)

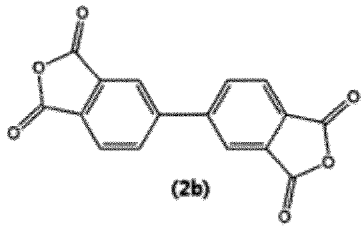

(2b)

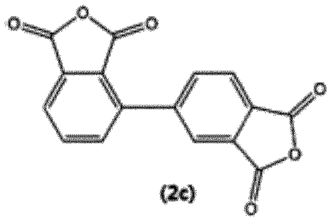

(2c)

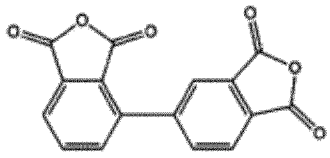

(2d)

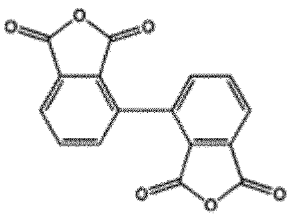

(2e)

The hydrogen in the aromatic ring of the Chemical Formula 2 may be replaced by a substituent selected from a halogen atom comprising -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group and a $C_{6-20}$ aryl group. For example, the halogen atom may be fluorine (-F), the halogenoalkyl may be a $C_{1-10}$ fluoroalkyl containing a fluorine atom selected from a fluoromethyl group, a perfluoroethyl group, a trifluoromethyl group and the like, the alkyl group may be selected from a methyl group, an ethyl group, a propyl group, an isopropyl group, a t-butyl group, a pentyl group and a hexyl group, and the aryl group may be selected from a phenyl group and a naphthalenyl group. More preferably, the substituent may be a fluorine atom and a fluoroalkyl group containing a fluorine atom.

Further, the method for manufacturing the polyamide-imide comprises the steps of:

stirring a solution of diamine containing the structure of the following Chemical Formula 4;
adding tetracarboxylic dianhydride containing a tetravalent organic group of the following Chemical Formula 2 and the compound of the following Chemical Formula 3 to the diamine solution followed by reacting thereof to prepare a polyamide-imide precursor; and
imidizing the polyamide-imide precursor:

[Chemical Formula 2]

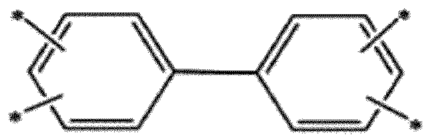

wherein,

$X_1$ may be a tetravalent organic group containing two or more aromatic rings,

[Chemical Formula 3]

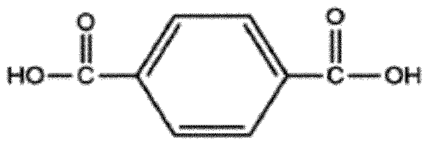

wherein,

$Y_1$ and $Y_2$ may be, each independently, a divalent organic group derived from diisocyanate, and any one of $Y_1$ and $Y_2$ may contain a divalent organic group derived from the compound of the following Chemical Formula 4:

[Chemical Formula 4]

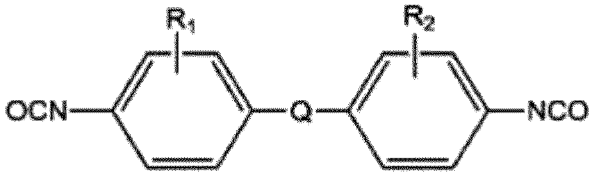

wherein,

$R_1$ and $R_2$ may be each independently a substituent selected from a halogen atom comprising -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group, and a $C_{6-20}$ aryl group.

Q may be selected from the group consisting of a single bond, -O-, - $CR_{18}R_{19}$-, -C(=O)-, -C(=O)O-, -C(=O)NH-, -S-, $-SO_2-$, a phenylene group and a combination thereof, wherein $R_{18}$ and $R_{19}$ may be each independently selected from the group consisting of a hydrogen atom, a $C_{1-10}$ alkyl group and a $C_{1-10}$ fluoroalkyl group.

For example, the compound of the Chemical Formula 4 may be selected from the compounds of the following Chemical Formula 4a to Chemical Formula 4d:

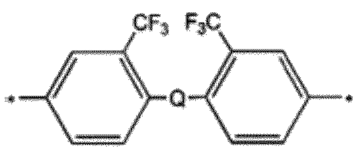

(4a)

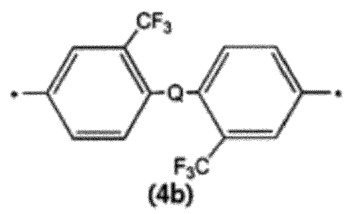

(4b)

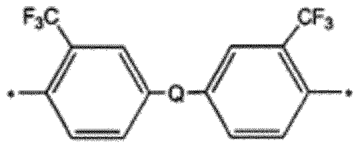

(4c)

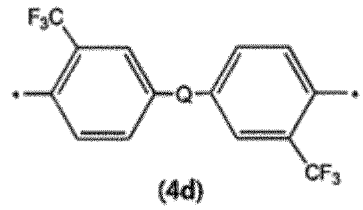

(4d)

wherein Q may have the same meanings as defined in the Chemical Formula 4.

According to one embodiment, the polyamide-imide may further contain a repeating unit formed from polymerization of anhydride and diamine. The anhydride which can be used in the present invention may be bicycloheptene dicarboxylic anhydride (Nadicanhydride), anthracenyl ethynyl phthalic anhydride (4-(9-anthracenyl ethynyl)phthalic anhydride), adamantanecarbonyl chloride (1-Adamantanecarbonyl chloride), adamantanedicarbonyl dichloride (1,3-Adamantanedicarbonyl dichloride), norbonenecarbonyl chloride (5-Norbonene-2-carbonyl chloride), norbonenedicarbonyl chloride (5-Norbonene-2,3-dicarbonyl chloride), cyclopentane carbonyl chloride (cyclopentane chloride) and the like, and the anhydride may be contained in an amount of 10 mol% or less based on the total mole of the acid dianhydride of the Chemical Formula 2 and the anhydride.

In general, in the polyamide-imide polymerization, when using the diamine, a polyamic acid repeating unit is used as an intermediate, and an imidization process such as thermal imidization and a chemical imidization is additionally needed to imidize the polyamic acid to polyimide. In this imidization process, byproducts such as $H_2O$ are generated, or in the chemical imidization process, additional additives such as a catalyst are added. In order to remove the byproducts and additives, additional processes such as a precipitation process and a drying process are required. In particular, when using a monomer such as dicarboxyl chloride to introduce an amide group, hydrochloric acid is formed as a byproduct by bonding of Cl in the dicarboxyl chloride and H in the diamine 의 H, and therefore, an additional process for removing the byproduct is required. Further, the byproduct such as hydrochloric acid may markedly deteriorate a film forming property and polymerization reaction by gelating a polymerization solution.

In the present invention, as a reaction product, only $CO_2$ can be generated by reacting diisocyanate instead of diamine with tetracarboxylic dianhydride and the dicarboxylic acid of the Chemical Formula 3, and the $CO_2$ can be easily removed during the reaction, without being dissolved in a polymerization solvent, because the $CO_2$ is generated in gaseous state. Thus, separate precipitating process and drying process for removing adducts and additives are not required, and also the polyimide can be formed only by controlling polymerization temperature without a separate imidization process. Thus, the process can be highly simplified.

Further, when using the dicarboxyl chloride to introduce the amide group, the polyamide-imide of high molecular weight may be formed due to high reactivity but there may be a problem on controlling polymerization degree because it may be difficult to control the reaction. However, when polymerizing the polyamide-imide by reacting the diisocyanate and the dicarboxylic acid, reactivity is not strong, and therefore, molecular weight can be almost constantly controlled by constantly controlling environments of composition and polymerization condition. Thus, the polyamide-imide having more uniform characteristics may be provided. For example, the polyamide-imide may be polymerized according to the present invention in a molecular weight error range of $\pm$25% or less, and the polyamide-imide having the molecular weight error range of preferably $\pm$20%, more preferably $\pm$15% may be provided.

According to the present invention, in the Chemical Formula 1a to Chemical Formula 1b, the repeating structure of the Chemical Formula 1a and the repeating structure of the Chemical Formula 1b may be contained at molar ratio of 1:5 to 2:1. It is preferred to contain the repeating structure of the Chemical Formula 1b in a higher amount than the repeating structure of the Chemical Formula 1a, and for example, it may be contained at molar ratio of 1:5 to 1:2. Namely, the tetracarboxylic dianhydride containing the tetravalent organic group of the Chemical Formula 2 and the compound of the following Chemical Formula 3 may be polymerized at molar ratio of 1:5 to 2:1. Preferably, the compounds may be reacted with the diisocyanate of the Chemical Formula 4 at molar ratio of 1:5 to 1:2 to prepare a polyamide-imide precursor containing the repeating structure of the Chemical Formula 1b more than that of the Chemical Formula 1a. At this time, if the compound of the Chemical Formula 3 is reacted in an amount of 90 mol% or more, preferably more than 85 mol% or more, processability may be deteriorated, i.e., it may be difficult to manufacture a film due to strong effect of crystallinity derived from the polyamide, and therefore, optical characteristics such as transparency of the film thus obtained may be affected due to its deteriorated uniformity.

According to one embodiment, polyamide-imide is a random copolymer wherein its repeating structures are randomly arranged. This arrangement may prevent charge transfer and regular arrangement in chains, and it may minimize partial crystallization by hydrogen bonds between chains of the polyamide. Thus, a polyamide-imide film having better transparency can be obtained.

By introducing a polyamide group to the existing polyimide structure, the present invention can provide more

colorless transparent polyamide-imide having excellent heat resistance and mechanical properties because the polyamide group may increase distance between chains and therefore prevent charge transfer complex caused by packing and minimize yellowness caused by the charge transfer complex.

Further, by introducing a substituent having high electronegativity such as $R_1$ and $R_2$ to the diamine structure, the present invention can provide polyamide-imide having highly enhanced optical properties because the substituent can minimize charge transfer by inhibiting charge movement.

For example, the polyamide-imide may contain repeating structures of the following Chemical Formula 1a-1 and Chemical Formula 1b-1.

[Chemical Formula 1a-1]

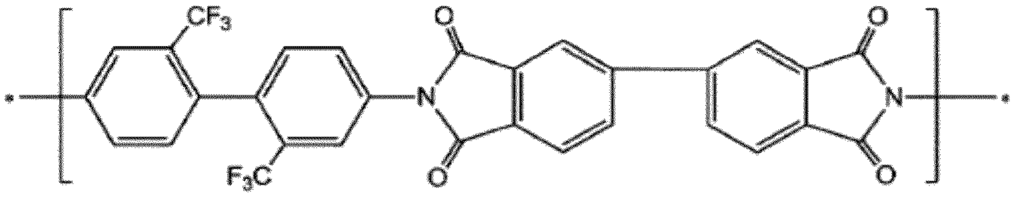

[Chemical Formula 1b-1]

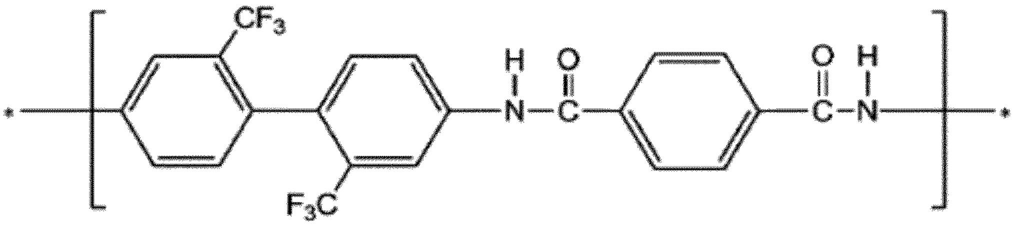

According to one embodiment, the polyamide-imide may be manufactured by further adding tetracarboxylic dianhydride of the following Chemical Formula 6:

[Chemical Formula 6]

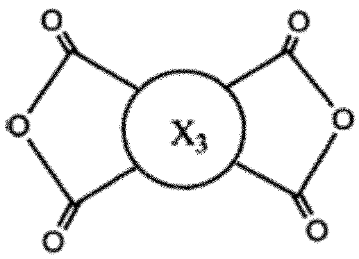

wherein, $X_3$ may be a tetravalent organic group containing two or more alicyclic and aromatic rings.

For example, $X_3$ may be a tetravalent organic group containing a $C_{3-24}$ aliphatic ring or a $C_{6-30}$ aromatic ring, for example, a tetravalent organic group of the following Chemical Formula 6a to Chemical Formula 6h, more preferably, a tetravalent organic group containing an aromatic or aliphatic ring having a rigid structure, i.e., a single ring structure, a structure wherein rings are linked by a single bond, or a polycyclic structure wherein rings are linked directly.

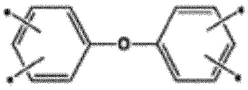

(6a)

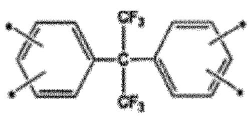

(6b)

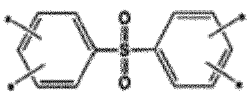

(6c)

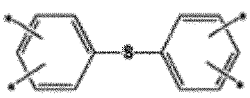
(6d)

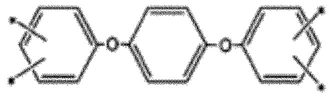
(6e)

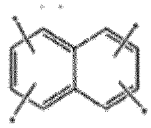
(6f)

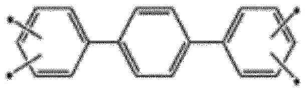
(6g)

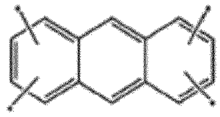
(6h)

At least one hydrogen atom in the tetravalent organic group of the Chemical Formula 6a to Chemical Formula 6h may be replaced by a substituent selected from the group consisting of a $C_{1-10}$ alkyl group (e.g., from a methyl group, an ethyl group, a propyl group, an isopropyl group, a t-butyl group, a pentyl group and a hexyl group), a $C_{1-10}$ fluoroalkyl (e.g., a fluoromethyl group, a perfluoroethyl group, a trifluoromethyl group and the like), a $C_{6-12}$ aryl group (for example, a phenyl group, a naphthalenyl group and the like), a sulfonic acid group and a carboxyl group, preferably a $C_{1-10}$ fluoroalkyl group.

In the repeating structures of the polyamide-imide, at least one repeating structure may include a divalent organic group and/or tetravalent organic group containing a fluorine-based substituent. Herein, the term 'fluorine-based substituent' means not only 'fluorine atom substituent' but also 'substituent containing a fluorine atom'. Preferably, the fluorine atom-containing substituent may be a $C_1$-$C_{10}$ or $C_1$-$C_6$ fluoroalkyl group. The fluorine-based substituent may be a $C_{1-10}$, preferably $C_{1-6}$ fluoroalkyl, and it may be contained in an amount of 30 mol% or more, preferably 40 mol% or more, or 60 mol% or more, and up to 100 mol%, preferably 90 mol% or less, or 80 mol% or less, based on the repeating structure of the whole polyamide-imide precursor.

The reaction of the tetracarboxylic dianhydride and the dicarboxylic acid or the dicarboxyl chloride with the diamine may be carried out by any common polymerization method such as solution polymerization, for manufacturing the polyamide-imide precursor, and specifically, the precursor may be manufactured by dissolving the diamine in an organic solvent, adding the tetracarboxylic dianhydride and the dicarboxylic acid or the dicarboxyl chloride to the resulting solution followed by polymerizing thereof. At this time, the total amount of the tetracarboxylic dianhydride and the dicarboxylic acid or the dicarboxyl chloride and the diamine may be mixed at molar ratio of 1:1.1 to 1.1:1 or 1:1.05 to 1.05:1 to obtain preferably molecular weight, mechanical properties and viscosity.

The reaction may be performed under inert gas or nitrogen atmosphere, and also performed under anhydrous condition.

Further, the polymerization may be performed at a temperature of -20°C to 60°C, preferably 0°C to 30°C.

Further, the organic solvent which can be used for the polymerization may be, specifically, selected from the group consisting of ketones such as γ-butyrolactone, 1,3-dimethyl-imidazolidinone, methylethyl ketone, cyclohexanone, cyclopentanone, 4-hydroxy-4-methyl-2-pentanone and the like; aromatic hydrocarbons such as toluene, xylene, tetramethylbenzene and the like; glycol ethers (cellosolve) such as ethyleneglycol monoethyl ether, ethyleneglycol monomethyl ether, ethyleneglycol monobutyl ether, diethyleneglycol monoethyl ether, diethyleneglycol monomethyl ether, diethyleneglycol monobutyl ether, propyleneglycol monomethyl ether, propyleneglycol monoethyl ether, dipropyleneglycol diethyl ether, triethyleneglycol monoethyl ether and the like; ethyl acetate, butyl acetate, ethyleneglycol monoethyl ether acetate, ethyleneglycol monobutyl ether acetate, diethyleneglycol monoethyl ether acetate, dipropyleneglycol monomethyl ether acetate, ethanol, propanol, ethyleneglycol, propyleneglycol, carbitol, dimethyl acetamide (DMAc), N,N-diethyl acetamide, dimethyl formamide (DMF), diethyl formamide (DEF), N-methyl pyrrolidone (NMP), N-ethyl pyrrolidone (NEP), 1,3-dimethyl-2-imidazolidinone, N,N-dimethylmethoxy acetamide, dimethyl sulfoxide, pyridine, dimethyl sulfone, hexamethyl phosphoramide, tetramethyl urea, N-methyl caprolactam, tetrahydrofuran, m-dioxane, P-dioxane, 1,2-dimethoxyethane, bis(2-methoxyethyl)ether, 1,2-bis(2-methoxyethoxy)ethane, bis[2-(2-methoxyethoxy)]ether, and a mixture thereof.

More preferably, the solvent may be a sulfoxide-based solvent such as dimethyl sulfoxide, diethyl sulfoxide and the like; a formamide-based solvent such as N,N-dimethyl formamide, N,N-diethyl formamide and the like; an acetamide-based solvent such as N,N-dimethyl acetamide, N,N-diethyl acetamide and the like; a pyrrolidone-based solvent such as N-methyl-2-pyrrolidone, N-vinyl-2-pyrrolidone and the like; a phenol-based solvent such as phenol, o-, m- or p-cresol, xylenol, halogenated phenol, catechol and the like; or hexamethyl phosphoramide, γ-butyrolactone and the like, and the solvent may be used alone or as a mixture thereof, but not limited thereto. An aromatic hydrocarbon such as xylene and toluene may be further used, and in order to accelerate dissolution of the polymer, an alkali metal salt or alkali earth metal salt may be further added to the solvent in an amount of about 50 wt% or less, based on the total amount of the solvent.

The polyamide-imide precursor composition manufactured by the method according to the present invention may contain the solid component in such an amount that the composition has an appropriate viscosity considering its film formation processability such as coatability. According to one embodiment, the content of the composition may be controlled to have the total content of the polymer of 5 to 25 wt%, preferably 5 to 20 wt%, more preferably 5 to 20 wt% or 5 to 15 wt%.

Further, the content of the composition may be controlled such that the polyamide-imide precursor composition has viscosity of 500 cP or higher or 1,000 cP or higher, preferably 3,000 cP or higher, and the viscosity of the polyamide-imide precursor composition may be controlled to 30,000 cP or lower or 20,000 cP or lower, preferably 18,000 cP or lower or 15,000 cP or lower. If the viscosity of the polyamide-imide precursor composition is lower than 500 cP or higher than 30,000 cP, optical properties of the polyamide-imide film may be deteriorated due to bubble formation during the process and bad surface profile.

Further, the polyamide-imide may have a weight average molecular weight of 10,000 to 200,000 g/mol, 20,000 to 100,000g/mol or 30,000 to 100,000 g/mol.

Further, the polyamide-imide may have a molecular weight distribution (Mw/Mn) of 1.1 to 2.5, preferably. If the imidization rate, weight average molecular weight or molecular weight distribution of the polyamide-imide is out of the range defined above, there may be a difficulty in forming the film or there is a risk that the characteristics of the polyamide-imide-based film such as transmittance, heat resistance and mechanical properties may be deteriorated.

The polyamide-imide precursor composition may be in the form of a solution dissolved in an organic solvent, and in this case, for example, when the polyamide-imide precursor is synthesized in the organic solvent, the solution may be the reaction solution thus obtained itself or a solution obtained by diluting the reaction solution with another solvent. Further, when the polyamide-imide precursor is obtained as powder, the solution may be a solution obtained by dissolving the powder in an organic solvent.

Further, when preparing the solution by dissolving the polymer powder in an organic solvent, the reaction may be conducted by heating at a temperature of, preferably, 20°C to 150°C, more preferably, 20°C to 80°C.

A polyamide-imide film having excellent mechanical properties as well as colorless transparency can be manufactured by introducing a polyamide structure to a rigid polyimide molecular structure to increase distance between chains thereby reducing packing between chains, and by combining a substituent having high electronegativity to a polyamide-imide chain structure to reduce charge transfer. Further, by using diisocyanate instead of diamine in the polymerization reaction, a polyamide-imide having more uniform characteristics can be provided through a more simplified process.

Further, the polyamide-imide-based film may be a colorless transparent polyamide-imide film having a thickness of 20 μm to 100 μm, a haziness of 2 or less, preferably 1 or less, more preferably 0.9 or less, a transmittance of at least 80% to light at a wavelength of 380 nm to 760 nm in the film thickness of 10 μm to 50 μm, and a yellowness index (YI) of about 10 or less, preferably about 7 or less or about 5 or less, more preferably about 4 or less, or 3 or less. The film can exhibit markedly improved transparency and optical properties due to its excellent light transmittance and yellowness index.

Further, the polyamide-imide-based film may be an anisotropic film having an in-plane retardation (Rin) of about 0 to about 100 nm and a thickness retardation ($R_{th}$) of at least about 200 nm, or an in-plane retardation (Rin) of about 0 to about 70 nm and a thickness retardation ($R_{th}$) of at least about 300 nm.

Further, the polyamide-imide-based film may have a modulus of at least about 5.0 GP, or about 5 to about 9 GPa. Surface hardness can be measured three times per pencil under a load of 750 gf using a pencil hardness tester according to the measuring standard JIS K5400, and then degrees of scratch and dent can be observed to determine hardness. The film may have surface hardness of, preferably H or higher, more preferably 2H or higher.

Further described herein is an article comprising the polyamide-imide copolymer is provided.

The article maybe a film, a fiber, a coating material, an adhesive and the like, but not limited thereto. The article may be formed by a dry/wet method, a dry method, a wet method and the like using a composite composition of the copolymer and inorganic particles, but not limited thereto. Specifically, as described above, the article may be an optical film, and in the case, the composition comprising the polyamide-imide copolymer may be easily manufactured by being applied on a substrate through a spin coating method followed by being dried and cured.

The polyamide-imide can have excellent colorless transparent characteristic while maintaining characteristics such as heat resistance, mechanical strength and the like due to its rigid structure. Thus, it can be used in various fields such as a substrate for a device, a cover substrate for a display, an optical film, an integrated circuit (IC) package, an adhesive film, a multi-layer flexible printed circuit (FPC), a tape, a touch panel, a protection film for an optical disk and the like, and particularly, it can be suitable for a cover substrate for a display.

Further described herein is a display device comprising the article is provided. Specifically, the display device may be a liquid crystal display device (LCD), an organic light emitting diode (OLED) and the like, but not limited thereto.

[Best Mode Carrying out the Invention]

The present invention will be explained in detail with reference to the following examples, including test examples.

<Example 1> DICTFMB (1)/BPDA(0.3)_TPA(0.7)

N,N-dimethyl acetamide (DMAc) 260 g was filled in a reactor under nitrogen atmosphere, and then 2,2-bis(trifluoromethyl)-4,4-biphenyl diisocyanate (DICTFMB) 42 g was dissolved while maintaining the temperature of the reactor to 25°C. 3,3',4,4'-biphenyltetracarboxylic dianhydride (BPDA) 10 g was added to the DICTFMB solution at the same temperature, and dissolved with stirring for a predetermined period of time. After enough stirring, the temperature was lowered to 0°C, terephthaloyl acid (TPA) 13 g was added thereto and stirring was continued. Solid content of the polyamide-imide precursor solution manufactured from the reaction was controlled to 16 wt% to obtain a polyamide-imide solution.

Viscosity and molecular weight of the polyamide-imide solution manufactured above were measured and the results are shown in Table 1.

<Comparative Example 1> TFMB(1)/BPDA(0.3)_TPC(0.7)

N,N-dimethyl acetamide (DMAc) 400 g was filled in a reactor under nitrogen atmosphere, and then 2,2-bis(trifluoromethyl)-4,4-biphenyl diamine (TFMB) 36 g was dissolved while maintaining the temperature of the reactor to 25°C. 3,3',4,4'-biphenyltetracarboxylic dianhydride (BPDA) 10 g was added to the TFMB solution at the same temperature, and dissolved with stirring for a predetermined period of time. After enough stirring, the temperature was lowered to 0°C, terephthaloyl chloride (TPC) 16 g was added thereto and stirring was continued to obtain a polyamide-imide precursor solution. Pyridine and acetic anhydride were added to the solution manufactured above and stirred enough, and then precipitated with a mixture of methanol and water. The precipitated polyamide-imide powder was dried and dissolved in DMAc to obtain a polyamide-imide precursor solution of solid content of 13 wt%.

Viscosity and molecular weight of the polyamide-imide solution manufactured above were measured and the results are shown in Table 1.

Table 1

| | BPDA(0.3)/TPA(0.7)_DICTFMB Example 1 | BPDA(0.3)/TPC(0.7)_TFMB Comparative Example 1 |
|---|---|---|
| Precipitating process | X | O |
| Drying process | X | O |
| Molecular weight, Mw | 45,000 | 49,000 |

From the above results, it can be found that, according to the present invention, separate precipitating process and drying process for removing adducts and additives are not required, and also the polyimide can be formed only by controlling polymerization temperature without a separate imidization process, and therefore, the process can be highly simplified.

<Example 2> DICTFMB(1)/BPDA(0.20)/6FDA(0.10)_TPA(0.7)_Nadic Anhydride(0.01)

<Manufacture of Polyamide-imide Copolymer>

N,N-dimethyl acetamide (DMAc) 772 g was filled in a 1 L reactor equipped with an agitator, a nitrogen injecting device, a dropping funnel, a temperature controller and a cooler while passing nitrogen gas through the reactor, and temperature of the reactor was set to 25°C. Then, 2,2'-bis(trifluoromethyl)-4,4'-biphenyl diisocyanate (DICTFDB) 74.29 g was dissolved in the solvent, and temperature of the solution was maintained at 25°C. 4,4'-Biphenyldicarbonyl chloride (6FDA) 8.885 g and 3,3',4,4'-biphenyltetracarboxylic dianhydride (BPDA) 11.76 g were put into the reactor, and dissolved and reacted by stirring for a predetermined period of time. At this time, temperature of the solution was maintained at 25°C. Then, terephthaloyl acid (TPA) 23.21 g was added thereto, stirred for 12 hours, and Nadic Anhydride 0.33 g was added thereto to obtain a polyamic acid solution of solid content of 13 wt%.

Pyridine 13 g and acetic anhydride 17 g were added to the polyamic acid solution, stirred for 30 min and then stirred again at 70°C for 1 hour followed by cooling to room temperature. The resulting solution was precipitated with

methanol 20 L, and then the precipitated solid was filtered, pulverized, vacuum dried at 100°C for 6 hours to obtain a polyamide-imide copolymer as a solid powder of 98 g.

<Manufacture of Polyamide-imide Copolymer Film >

The polyamide-imide solid powder 98 g was dissolved in N,N-dimethyl acetamide (DMAc) 656 g to obtain a 13 wt% solution, and the solution thus obtained was coated on a stainless plate, cast to the thickness of 400 μm and dried using hot air of 130°C for 30 min. Then the film was stripped from the stainless plate and fixed to a frame with pins. The film-fixed frame was placed in a vacuum oven, slowly heated from 100°C to 300°C for 2 hours and slowly cooled. A polyamide-imide film was separated from the frame and then heated again at 300°C for 30 min as a final thermal treatment.

<Comparative Example 2> TFMB(1)/6FDA(0.7)_TPC(0.3)

<Manufacture of Polyamide-imide Copolymer >

N,N-dimethyl acetamide (DMAc) 797 g was filled in a 1 L reactor equipped with an agitator, a nitrogen injecting device, a dropping funnel, a temperature controller and a cooler while passing nitrogen gas through the reactor, and temperature of the reactor was set to 25°C. Then, TFDB 64.046 g was dissolved in the solvent, and temperature of the solution was maintained at 25°C. 6FDA 26.655 g was put into the reactor, and dissolved and reacted by stirring for a predetermined period of time. At this time, temperature of the solution was maintained at 25°C. Then, TPC 28.423 g was added thereto to obtain a polyamide-imide precursor solution of solid content of 13 wt%.

Pyridine 13 g and acetic anhydride 17 g were added to the solution, stirred for 30 min and then stirred again at 70°C for 1 hour followed by cooling to room temperature. The resulting solution was precipitated with methanol 20 L, and then the precipitated solid was filtered, pulverized, vacuum dried at 100°C for 6 hours to obtain a polyamide-imide copolymer as a solid powder of 120 g.

<Manufacture of Polyamide-imide Copolymer Film>

The polyamide-imide copolymer solid powder 120 g was dissolved in N,N-dimethyl acetamide (DMAc) 723 g to obtain a 13 wt% solution.

Then, a film was manufactured by the same method described in Example 2.

<Test Example 2>

<Coefficient of Thermal Expansion (CTE)>

Coefficient of thermal expansion was measured two times using TMA (Perkin Elmer, Diamond TMA) in the temperature range between 50°C and 300°C according to TMA-Method, and at this time, heating rate was 10°C/min and load of 100 mN was applied. The first value was excluded and the second value was presented. Namely, because there may be residual stress in the film after film forming and heat treatment, the residual stress was completely removed through the first run and then the second value was presented as an actual measurement value.

<Measurement of Thickness and Calculation of Solvent Resistance Index >

A polyamide-imide film was dried in a 80°C vacuum oven for 1 hour, and then thickness of the film was measured at five random points. The film was immersed again in a beaker containing DMAc for 10 min, washed with water, dried in the 80°C vacuum oven for 1 hour, and then thickness of the film was measured at five random points. Then, using the thickness of the film before and after the solvent immersion, solvent resistance index defined as the following Formula 1 was calculated.

[Formula 1]

$$\text{Solvent resistance (\%)} = (T_0 - T_{10})/T_0 \times 100$$

wherein, $T_{10}$ is film thickness after immersing the film in a polar solvent for 10 min, and $T_0$ is film thickness before immersing the film in a polar solvent.

Thickness was measured with Anritsu Electronic Micrometer, and deviation of the device was ±0.5% or lower.

Table 2

| | Example 2 | Comparative Example 2 |
|---|---|---|
| Thickness (μm) | 70 | 100 |
| Coefficient of Thermal Expansion (ppm/°C) | 12 | 27 |
| Solvent Resistance Index (%) | 0.5 | 2.5 |

**Claims**

**1.** A method for manufacturing a polyamide-imide containing a repeating structure of the following Chemical Formula 1a and a repeating structure of the following Chemical Formula 1b together:

[Chemical Formula 1a]

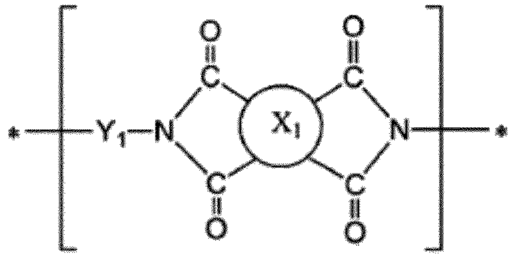

[Chemical Formula 1b]

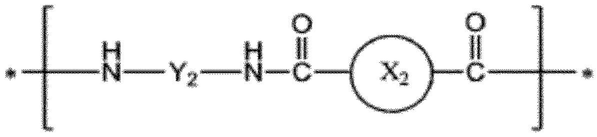

wherein,
$X_1$ is a tetravalent organic group of the following Chemical Formula 2 derived from tetracarboxylic dianhydride,

[Chemical Formula 2]

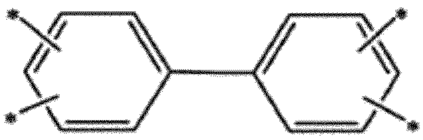

$X_2$ is a divalent organic group derived from the compound of the following Chemical Formula 3,

[Chemical Formula 3]

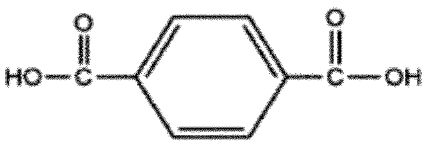

wherein,
$Y_1$ and $Y_2$ are, each independently, a divalent organic group derived from diisocyanate, and any one of $Y_1$ and $Y_2$

contains a divalent organic group derived from the compound of the following Chemical Formula 4:

[Chemical Formula 4]

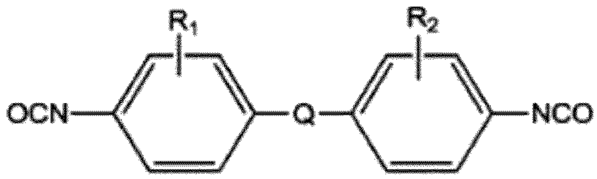

wherein,

$R_1$ and $R_2$ are each independently a substituent selected from a halogen atom comprising -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group, and a $C_{6-20}$ aryl group,
Q is selected from the group consisting of a single bond, -O-, $-CR_{18}R_{19}-$, -C(=O)-, - C(=O)O-, -C(=O)NH-, -S-, $-SO_2-$, a phenylene group and a combination thereof, wherein $R_{18}$ and $R_{19}$ are each independently selected from the group consisting of a hydrogen atom, a $C_{1-10}$ alkyl group and a $C_{1-10}$ fluoroalkyl group;
the method comprising the following steps of:

a) stirring a solution of diisocyanate containing the compound of the following Chemical Formula 4;
b) adding tetracarboxylic dianhydride containing the structure of the following Chemical Formula 2 and the compound of the following Chemical Formula 3 to the solution prepared in the step a) followed by reacting thereof to prepare a polyamide-imide precursor; and
c) imidizing the polyamide-imide precursor:

[Chemical Formula 2]

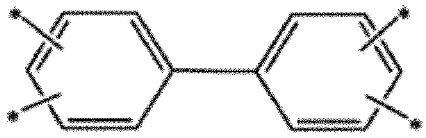

[Chemical Formula 3]

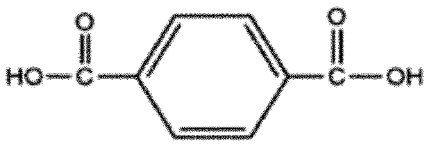

[Chemical Formula 4]

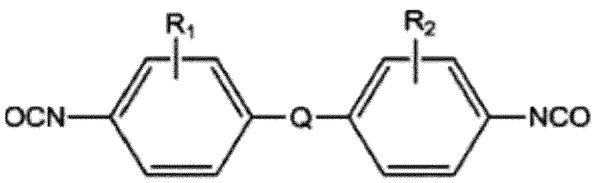

wherein,
$R_1$ and $R_2$ are each independently a substituent selected from a halogen atom comprising -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group, and a $C_{6-20}$ aryl group.

2. The method according to claim 1, wherein the divalent organic group of the Chemical Formula 4 is selected from the compounds of the following Chemical Formula 4a to Chemical Formula 4d:

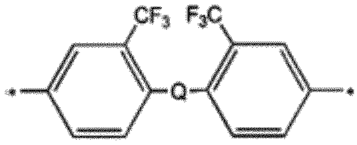

(4a)

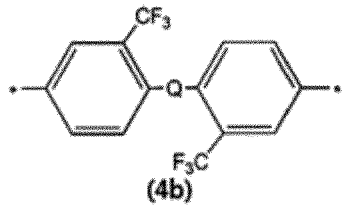

(4b)

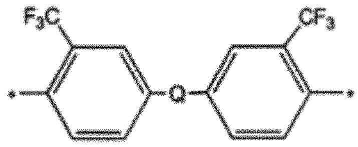

(4c)

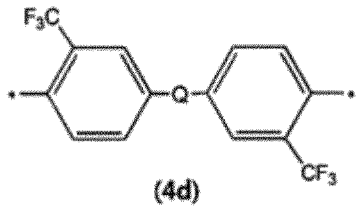

(4d)

wherein, Q has the same meanings as defined in the Chemical Formula 4.

3. The method according to claim 1, wherein the repeating structure of the Chemical Formula 1a and the repeating structure of the Chemical Formula 1b are polymerized at molar ratio of 1:5 to 2:1.

4. The method according to claim 1, wherein the repeating structure of the Chemical Formula 1a and the repeating structure of the Chemical Formula 1b are polymerized in the form of a random copolymer.

5. The method according to claim 1, wherein the compounds of the Chemical Formula 1a and the Chemical Formula 1b contains the repeating structures of the following Chemical Formula 1a-1 and Chemical Formula 1b-1:

[Chemical Formula 1a-1]

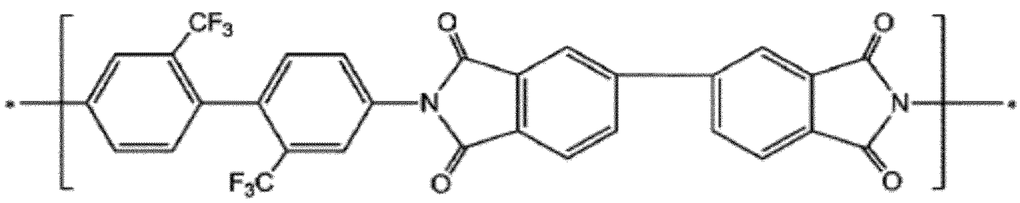

[Chemical Formula 1b-1]

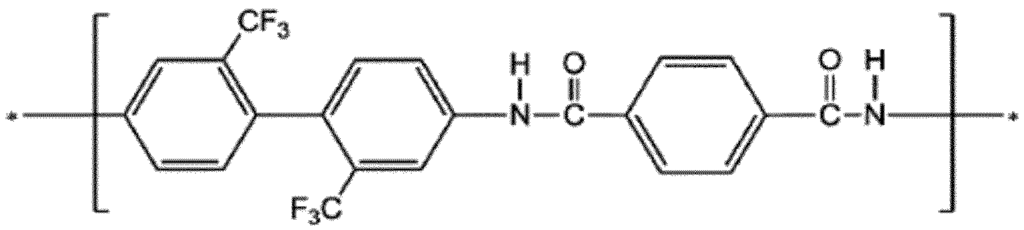

.

6. The method according to claim 1, wherein the polyamide-imide further contains tetracarboxylic dianhydride of the following Chemical Formula 6:

[Chemical Formula 6]

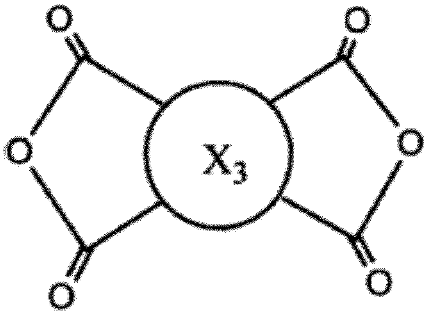

wherein, $X_3$ is selected from tetravalent organic groups of the following Chemical Formula 6a to Chemical Formula 6h:

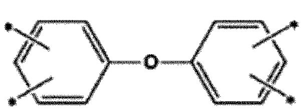
(6a)

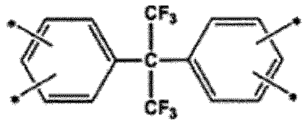
(6b)

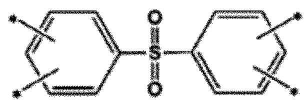
(6c)

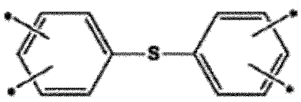
(6d)

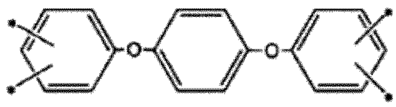
(6e)

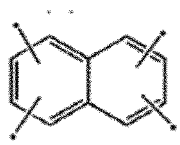
(6f)

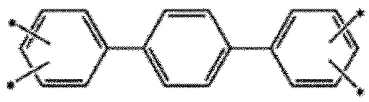
(6g)

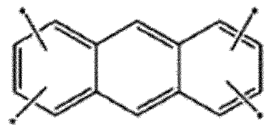
(6h)

7. The method for manufacturing the polyamide-imide according to claim 1, wherein the tetracarboxylic dianhydride of the Chemical Formula 2 and the compound of the Chemical Formula 3 are added at molar ratio of 1:5 to 2:1.

8. The method for manufacturing the polyamide-imide according to claim 1, wherein the compounds of the Chemical Formula 2 and the Chemical Formula 3 and the diisocyanate of the Chemical Formula 4 are reacted at molar ratio of 1:1.1 to 1.1:1.

9. The method for manufacturing the polyamide-imide according to claim 1, wherein anhydride is further added in the step b) before reaction.

**Patentansprüche**

1. Verfahren zur Herstellung eines Polyamidimids, das eine sich wiederholende Struktur der folgenden chemischen Formel 1a und eine sich wiederholende Struktur der folgenden chemischen Formel 1b zusammen enthält:

[Chemische Formel 1a]

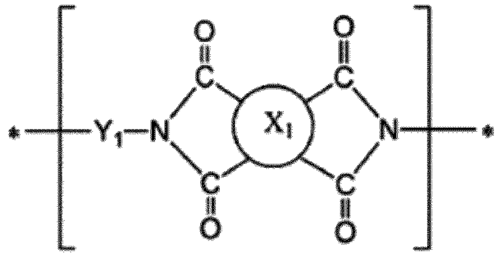

[Chemische Formel 1b]

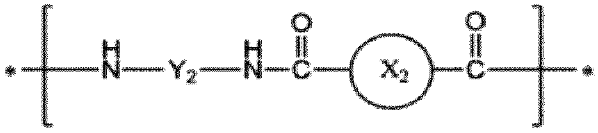

wobei

$X_1$ eine tetravalente organische Gruppe der folgenden chemischen Formel 2 ist, die von Tetracarbonsäuredianhydrid abgeleitet ist,

[Chemische Formel 2]

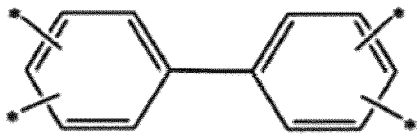

$X_2$ eine divalente organische Gruppe ist, die von der Verbindung der folgenden chemischen Formel 3 abgeleitet ist,

[Chemische Formel 3]

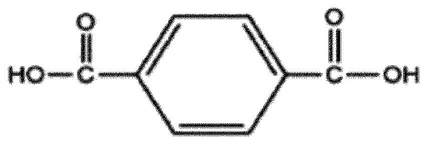

wobei

$Y_1$ und $Y_2$ jeweils unabhängig eine divalente organische Gruppe sind, die von Diisocyanat abgeleitet ist, und eines von $Y_1$ und $Y_2$ eine divalente organische Gruppe enthält, die von der Verbindung der folgenden chemischen Formel 4 abgeleitet ist:

[Chemische Formel 4]

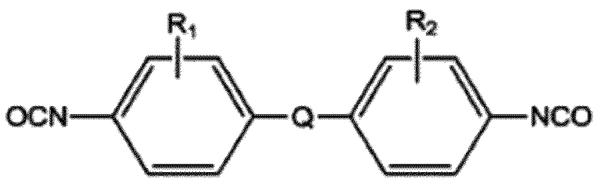

wobei

$R_1$ und $R_2$ jeweils unabhängig ein Substituent sind, der ausgewählt ist aus einem Halogenatom, umfassend -F, -Cl, -Br und -I, einer Hydroxylgruppe (-OH), einer Thiolgruppe (-SH), einer Nitrogruppe (-$NO_2$), einer Cyanogruppe, einer $C_{1-10}$-Alkylgruppe, einer $C_{1-4}$-Halogenalkoxylgruppe, einer $C_{1-10}$-Halogenalkylgruppe und einer $C_{6-20}$-Arylgruppe,

Q ausgewählt ist aus der Gruppe, bestehend aus einer Einfachbindung, -O-, - $CR_{18}R_{19}$-, -C(=O)-, -C(=O)O-, -C(=O)NH-, -S-, -$SO_2$-, einer Phenylengruppe und einer Kombination davon, wobei $R_{18}$ und $R_{19}$ jeweils unabhängig ausgewählt sind aus der Gruppe, bestehend aus einem Wasserstoffatom, einer $C_{1-10}$-Alkylgruppe und einer $C_{1-10}$-Fluoralkylgruppe;

wobei das Verfahren die folgenden Schritte umfasst:

a) Rühren einer Lösung von Diisocyanat, das die Verbindung der folgenden chemischen Formel 4 enthält;
b) Zugeben von Tetracarbonsäuredianhydrid, das die Struktur der folgenden chemischen Formel 2 und die Verbindung der folgenden chemischen Formel 3 enthält, zu der Lösung, die im Schritt a) hergestellt wurde, gefolgt von deren Umsetzung, um einen Polyamidimid-Vorläufer herzustellen; und
c) Imidisieren des Polyamidimid-Vorläufers:

[Chemische Formel 2]

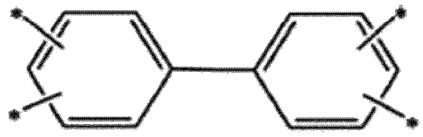

[Chemische Formel 3]

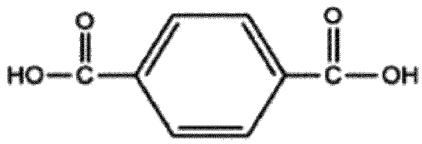

[Chemische Formel 4]

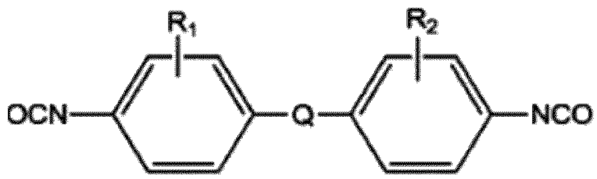

wobei

$R_1$ und $R_2$ jeweils unabhängig ein Substituent sind, der ausgewählt ist aus einem Halogenatom, umfassend -F, -Cl, -Br und -I, einer Hydroxylgruppe (-OH), einer Thiolgruppe (-SH), einer Nitrogruppe (-$NO_2$), einer Cyanogruppe, einer $C_{1-10}$-Alkylgruppe, einer $C_{1-4}$-Halogenalkoxylgruppe, einer $C_{1-10}$-Halogenalkylgruppe und einer $C_{6-20}$-Arylgruppe,

**2.** Verfahren nach Anspruch 1, wobei die divalente organische Gruppe der chemischen Formel 4 ausgewählt ist aus den Verbindungen der folgenden chemischen Formel 4a bis chemischen Formel 4d:

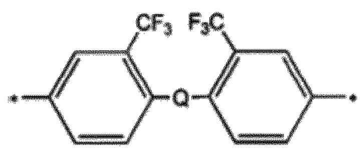

**(4a)**

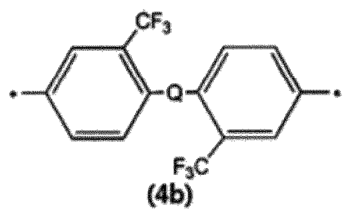

**(4b)**

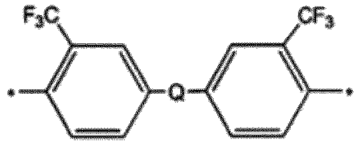

(4c)

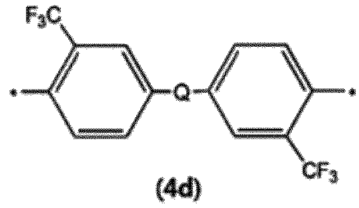

(4d)

wobei Q die gleichen Bedeutungen hat, wie in der chemischen Formel 4 definiert ist,

3. Verfahren nach Anspruch 1, wobei die sich wiederholende Struktur der chemischen Formel 1a und die sich wiederholende Struktur der chemischen Formel 1b in einem Molverhältnis von 1:5 bis 2:1 polymerisiert werden,

4. Verfahren nach Anspruch 1, wobei die sich wiederholende Struktur der chemischen Formel 1a und die sich wiederholende Struktur der chemischen Formel 1b in Form eines statistischen Copolymers polymerisiert werden,

5. Verfahren nach Anspruch 1, wobei die Verbindungen der chemischen Formel 1a und der chemischen Formel 1b die sich wiederholenden Strukturen der folgenden chemischen Formel 1a-1 und chemischen Formel 1b-1 enthalten:

[Chemische Formel 1a-1]

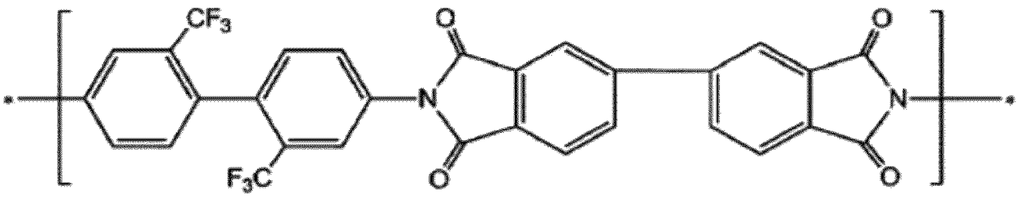

[Chemische Formel 1b-1]

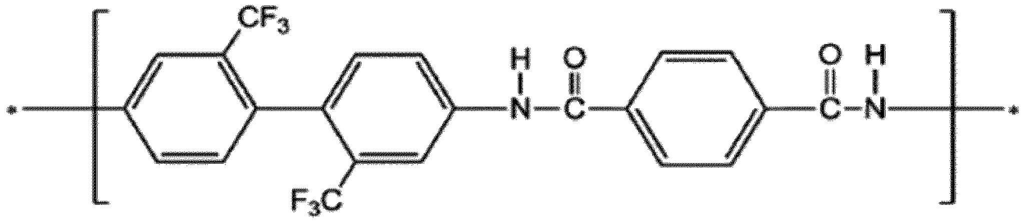

6. Verfahren nach Anspruch 1, wobei das Polyamidimid ferner Tetracarbonsäuredianhydrid der folgenden chemischen Formel 6 enthält:

[Chemische Formel 6]

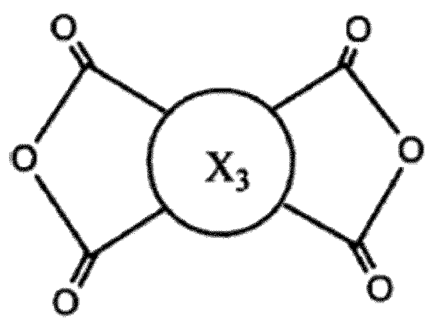

wobei $X_3$ ausgewählt ist aus tetravalenten organischen Gruppen der folgenden chemischen Formel 6a bis chemischen Formel 6h:

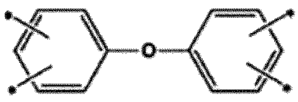
(6a)

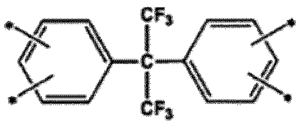
(6b)

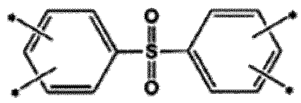
(6c)

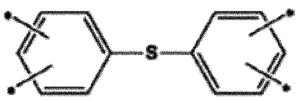
(6d)

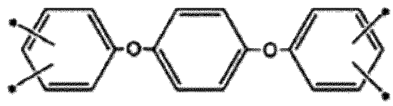
(6e)

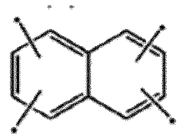
(6f)

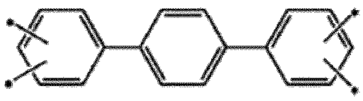
(6g)

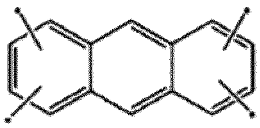
(6h)

**7.** Verfahren zur Herstellung des Polyamidimids nach Anspruch 1, wobei das Tetracarbonsäuredianhydrid der chemischen Formel 2 und die Verbindung der chemischen Formel 3 in einem Molverhältnis von 1:5 bis 2:1 zugegeben werden,

**8.** Verfahren zur Herstellung des Polyamidimids nach Anspruch 1, wobei die Verbindungen der chemischen Formel 2 und der chemischen Formel 3 und das Diisocyanat der chemischen Formel 4 in einem Molverhältnis von 1:1,1 bis 1,1:1 umgesetzt werden,

**9.** Verfahren zur Herstellung des Polyamidimids nach Anspruch 1, wobei weiteres Anhydrid im Schritt b) vor der Umsetzung zugegeben wird.

## Revendications

**1.** Procédé de fabrication d'un polyamide-imide contenant une structure répétitive de la Formule chimique 1a ci-après et une structure répétitive de la Formule chimique 1b ci-après ensemble :

[Formule chimique 1a]

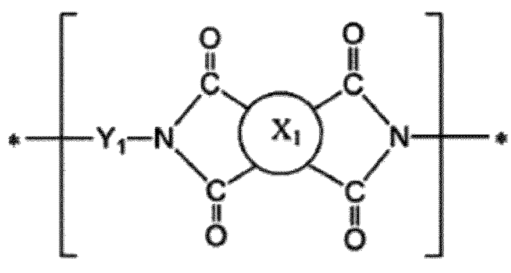

[Formule chimique 1b]

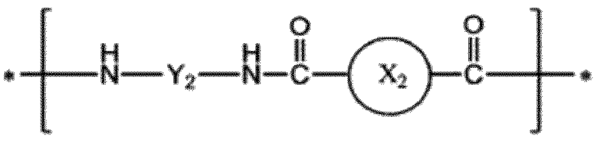

dans lequel,

$X_1$ est un groupe organique tétravalent de la Formule chimique 2 ci-après, dérivé d'un dianhydride tétracarboxylique,

[Formule chimique 2]

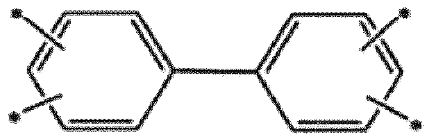

$X_2$ est un groupe organique divalent dérivé du composé de la Formule chimique 3 ci-après,

[Formule chimique 3]

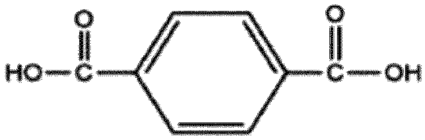

dans lequel,

$Y_1$ et $Y_2$ sont chacun indépendamment, un groupe organique divalent dérivé d'un diisocyanate, et soit $Y_1$ soit $Y_2$ contient un groupe organique divalent dérivé du composé de la Formule chimique 4 ci-après :

[Formule chimique 4]

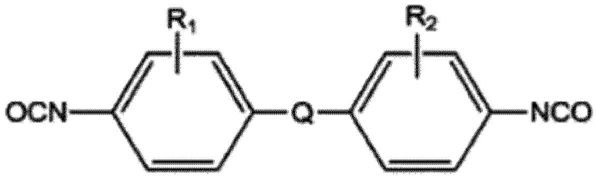

dans lequel,

$R_1$ et $R_2$ sont chacun indépendamment un substituant sélectionné parmi un atome d'halogène comprenant -F, -Cl, -Br et -I, un groupe hydroxyle (-OH), un groupe thiol (-SH), un groupe nitro ($-NO_2$), un groupe cyano, un groupe alkyle en $C_{1-10}$, un groupe halogénoalkoxyle en $C_{1-4}$, un groupe halogénoalkoxyle en $C_{1-10}$ et un groupe aryle en $C_{6-20}$,

Q est sélectionné dans le groupe constitué d'une seule liaison, -O-, $-CR_{18}R_{19}-$, - C(=O)-, -C(=O)O-, -C(=O)NH-, -S-, $-SO_2-$, un groupe phénylène et une combinaison de ces derniers, dans lequel $R_{18}$ et $R_{19}$ sont chacun indépendamment sélectionnés dans le groupe constitué d'un atome d'hydrogène, un groupe alkyle en $C_{1-10}$ et un groupe fluoroalkyle en $C_{1-10}$ ;

le procédé comprenant les étapes suivantes consistant à :

a) agiter une solution de diisocyanate contenant le composé de la Formule chimique 4 ci-après ;

b) ajouter un dianhydride tétracarboxylique contenant la structure de la Formule chimique 2 ci-après et le composé de la Formule chimique 3 ci-après à la solution préparée à l'étape a) puis les faire réagir pour préparer un précurseur de polyamide-imide ; et

c) imidiser le précurseur de polyamide-imide :

[Formule chimique 2]

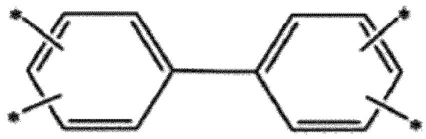

[Formule chimique 3]

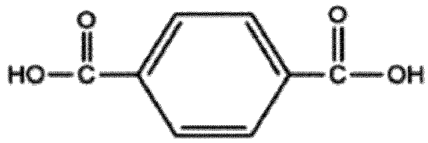

[Formule chimique 4]

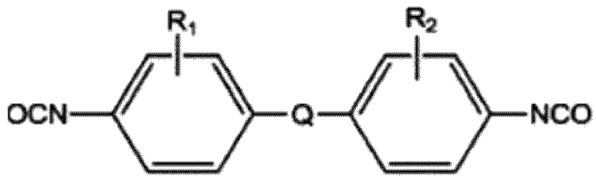

dans lequel,

$R_1$ et $R_2$ sont chacun indépendamment un substituant sélectionné parmi un atome d'halogène comprenant -F, -Cl, -Br et -I, un groupe hydroxyle (-OH), un groupe thiol (-SH), un groupe nitro ($-NO_2$), un groupe cyano, un groupe alkyle en $C_{1-10}$, un groupe halogénoalkoxyle en $C_{1-4}$, un groupe halogénoalkoxyle en $C_{1-10}$ et un groupe aryle en $C_{6-20}$.

2. Procédé selon la revendication 1, dans lequel le groupe organique divalent de la Formule chimique 4 est sélectionné parmi les composés de la Formule chimique 4a à la Formule chimique 4d ci-après :

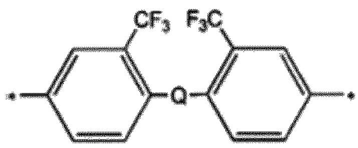

(4a)

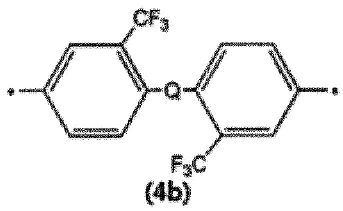

(4b)

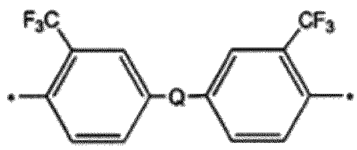

(4c)

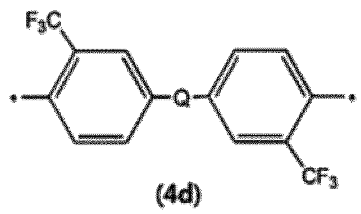

(4d)

dans lequel,

Q a les mêmes significations que celles définies dans la Formule chimique 4.

3. Procédé selon la revendication 1, dans lequel la structure répétitive de la Formule chimique 1a et la structure répétitive de la Formule chimique 1b sont polymérisées à un rapport molaire compris entre 1:5 et 2:1.

4. Procédé selon la revendication 1, dans lequel la structure répétitive de la Formule chimique 1a et la structure

répétitive de la Formule chimique 1b sont polymérisées sous la forme d'un copolymère aléatoire.

**5.** Procédé selon la revendication 1, dans lequel les composés de la Formule chimique 1a et de la Formule chimique 1b contiennent les structures répétitives de la Formule chimique 1a-1 et de la Formule chimique 1b-1 ci-après :

[Formule chimique 1a-1]

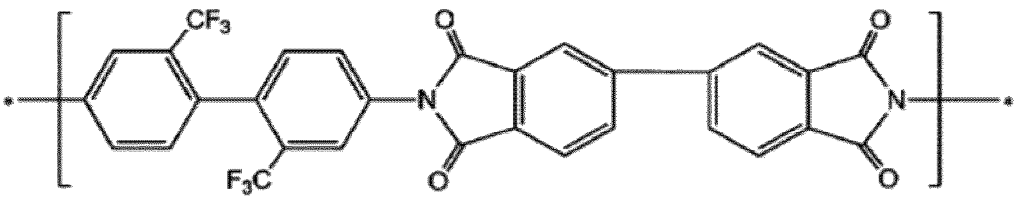

[Formule chimique 1b-1]

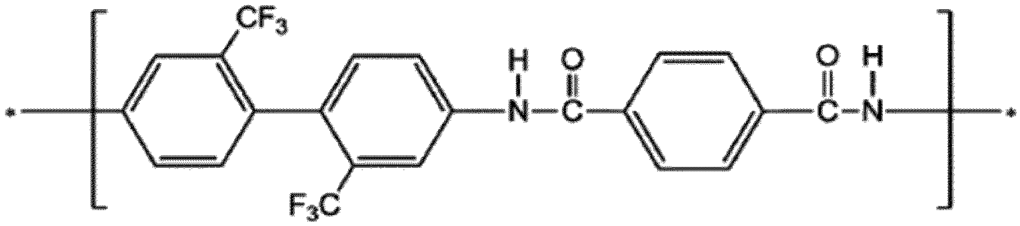

.

**6.** Procédé selon la revendication 1, dans lequel le polyamide-imide contient en outre un dianhydride tétracarboxylique de la Formule chimique 6 ci-après :

[Formule chimique 6]

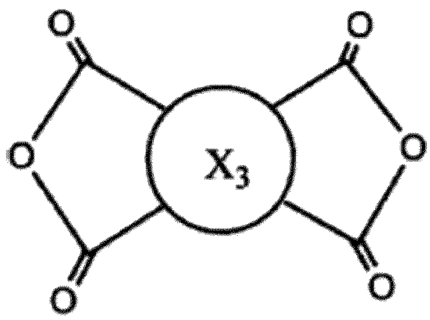

dans lequel,
$X_3$ est sélectionné parmi des groupes organiques tétravalents de la Formule chimique 6a à la Formule chimique 6h ci-après :

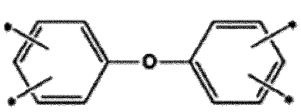

(6a)

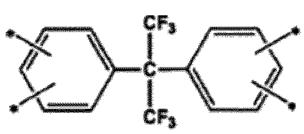

(6b)

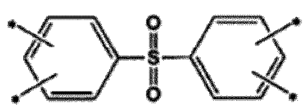

(6c)

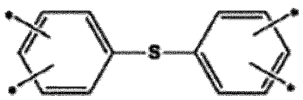

(6d)

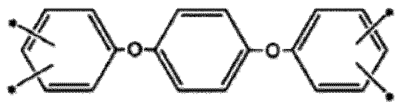

(6e)

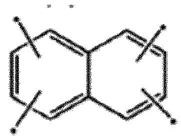

(6f)

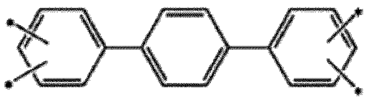

(6g)

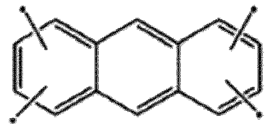

(6h)

**7.** Procédé de fabrication du polyamide-imide selon la revendication 1, dans lequel le dianhydride tétracarboxylique de la Formule chimique 2 et le composé de la Formule chimique 3 sont ajoutés à un rapport molaire compris entre 1:5 et 2:1.

**8.** Procédé de fabrication du polyamide-imide selon la revendication 1, dans lequel les composés de la Formule chimique 2 et de la Formule chimique 3 et le diisocyanate de la Formule chimique 4 sont réagis à un rapport molaire compris entre 1:1,1 to 1,1:1.

**9.** Procédé de fabrication du polyamide-imide selon la revendication 1, dans lequel un anhydride est ajouté en plus à l'étape b) avant la réaction.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013048126 A1
- KR 20080013076 A